# EUROPEAN PATENT APPLICATION

(11) **EP 4 604 391 A1**
(43) Date of publication of application: **20.08.2025**
(21) Application number: 25157723.5
(22) Date of filing: 13.02.2025
(51) Int. Cl.: H02S 40/00, F21V 17/10, H02S 40/12

(54) **ANCHORING AND TENSIONING UNIT FOR ANTI-HAIL NETS OF SOLAR PANELS**

(30) Priority: 15.02.2024 IT 202400003220
(71) Applicant: Groppalli S.r.l., 29010 Gragnano Trebbiense (PC) (IT)
(72) Inventor: GROPPALLI, Luciano, 29070 Agazzano (PC) (IT)
(74) Representative: De Bortoli, Tiziano

(57) **Abstract**

An anchoring and tensioning unit (1) for attaching an anti-hail net to a solar panel is described which comprises at least one anchoring bracket (2) having a head portion (21) intended to be fastened to the anti-hail net, a foot portion (22) intended to be fastened, directly or indirectly, to a frame of the solar panel or to a mounting crosspiece of the solar panel, and a connecting web extending between the head portion (21) and the foot portion (22), and clamping means (4) acting on the anchoring bracket (2; 2a, 2b) so as to cause a relative movement of the head portion (21) relative to the foot portion (22) that generates at said head portion (21) a pulling force pointing toward a side of the anchoring bracket opposing the side from which the anti-hail net extends.

## Description

The present invention generally falls within the technical field of photovoltaic systems and, in particular, of hail protection systems for solar panels. More in particular, the invention relates to an anchoring and tensioning unit for attaching an anti-hail net, in particular a metallic anti-hail net, to a solar panel.

Protecting solar panels adequately from the elements is an important aspect to be taken into account for the installation and operation of photovoltaic systems of any size, also in view of a tendency toward progressive worsening of atmospheric phenomena due to climate change.

Hail is one of the main causes of damage to solar panels due to atmospheric phenomena and of the consequent reduction, or even total loss, of productivity of the corresponding systems. In this regard, it must be noted that damage caused by the impact of hail on the active surfaces of solar panels is not limited to evident and widespread breakage of the respective protective front layer, typically made of hardened glass, but also comprises microcracks that are not visible to the naked eye, through which moisture and water can seep, causing phenomena of oxidation to the components of the panel over time and thus a gradual decrease in performance, up to complete failure.

To prevent or limit as much as possible damage due to hail, it is known to provide photovoltaic systems with additional protections in the form of anti-hail nets similar, or even identical, to those used in the agricultural field.

Anti-hail nets are typically suspended at a certain height above the area with solar panels through anchoring to support uprights installed along the perimeter of this area, according to solutions which, also in this case, are borrowed from the agricultural field.

This installation method is suitable to protect photovoltaic systems installed on the ground but is not much appropriate for photovoltaic systems installed on roofs or other coverings, because in these cases the installation of support uprights for anchoring the anti-hail nets is more difficult, as well as because of the considerably large overall dimensions, which have a negative impact on the aesthetic appearance of the building or structure.

Moreover, the anchoring means, usually in the form of ropes and tie-rods, used in these cases to fasten the anti-hail nets to the related support uprights are not particularly efficient for anchoring and tensioning metallic anti-hail nets, preferred where possible to protect solar panels, due to their greater strength and durability.

In view of the above, the aim of the present invention is to provide an anchoring and tensioning unit for anti-hail nets of solar panels that allows an anti-hail net, in particular a metallic anti-hail net, to be attached to a solar panel optimally in functional terms and, at the same time, with limited overall dimensions.

Within this aim, an object of the invention is to provide an anchoring and tensioning unit as defined above that allows the anti-hail net to be effectively and easily tensioned.

Another object of the invention is to provide an anchoring and tensioning unit as defined above that is simple to install and fits easily to different sizes or installation conditions of the solar panel.

A further object of the invention is to provide an anchoring and tensioning unit as defined above that is structurally simple and can be manufactured at low cost.

According with the present invention, these objects are achieved by means of an anchoring and tensioning unit for anti-hail nets of solar panels having the features stated in the appended claim 1.

In particular, the invention relates to an anchoring and tensioning unit for anti-hail nets of solar panels, comprising:
- at least one anchoring bracket having a head portion intended to be fastened to an anti-hail net of a solar panel, a foot portion intended to be directly or indirectly fastened to a frame of the solar panel or to a mounting crosspiece of the solar panel, and a connecting web extending between the head portion and the foot portion, and
- clamping means acting on the anchoring bracket so as to cause a relative displacement of said head portion relative to said foot portion that generates, at said head portion, a pulling force pointing toward a side of the anchoring bracket opposing the side from which the anti-hail net extends.

This anchoring and tensioning unit allows an anti-hail net to be associated with a single solar panel or with a group of solar panels close to the respective active surfaces, hence with limited installation space and minimum aesthetic impact. At the same time, it provides a particularly effective and sturdy tensioning mechanism of the anti-hail net, capable of generating high pulling forces, required for tensioning metallic anti-hail nets. These advantages are achieved through a relatively simple and versatile structure, whose components of which can be easily manufactured or produced, even in large series, at limited costs.

The aforesaid features make the anchoring and tensioning device of the invention particularly, although not exclusively, suitable for attaching anti-hail nets, in particular metallic anti-hail nets, to solar panels of photovoltaic systems permanently installed on roofs or other coverings, which require installation solutions that have reduced overall dimensions, are simple and reliable, and do not require frequent interventions for set-up or maintenance.

Preferably, the clamping means are adjustable, and the pulling force can be adjusted by varying the clamping degree of the clamping means.

Advantageously, the head portion and the foot portion of the anchoring bracket extend transversely in mutually opposite directions from the connecting web. In particular, the anchoring bracket is preferably substantially Z-shaped.

Preferably, the head portion and the foot portion of the anchoring bracket are parallel to each other.

Preferably, the connecting web of the anchoring bracket has a plate-shaped configuration.

Alternatively, the connecting web of the anchoring bracket can have an internally hollow, preferably diaphragmed, configuration, defining at least one channel extending in a direction of longitudinal extension of the anchoring bracket.

Such configuration allows making an anchoring bracket having a smaller longitudinal extension, i.e., width, as compared to a bracket having a plate-shaped connecting web, while keeping functionality and mechanical strength the same, thus advantageously reducing the size of the shade projected by the anchoring bracket onto a solar panel to which the anchoring and tensioning unit of the invention is attached, above all in conditions of grazing incidence of the solar radiation, such as for example during winter months.

According to a preferred embodiment, observing the anchoring bracket from the side, the foot portion has substantially a U-shape, defined by a fastening base of the foot portion, by an end portion of the connecting web adjacent to the fastening base, and by a leg projecting from the fastening base and facing said end portion of the connecting web.

Preferably, in this case the clamping means act between said end portion of the connecting web and said leg so that a tightening of the clamping means causes the connecting web to bend toward said leg. This bending, in turn, causes the aforesaid movement of the head portion of the fastening bracket relative to the foot portion, through which the pulling force for tensioning the anti-hail net is generated.

Conveniently, the clamping means can comprise at least one clamping bolt that extends transversely through a pair of holes provided in said end portion of the connecting web and in said leg, respectively.

Preferably, the head portion of the anchoring bracket is provided with a front anchoring groove for an edge portion of the anti-hail net.

The anchoring bracket can advantageously be made in one piece.

Preferably, the anchoring and tensioning unit also comprises an interconnecting member having an elongated shape for connecting the anchoring bracket to a mounting crosspiece of the solar panel. The interconnecting member is removably associated with the foot portion of the anchoring bracket along a direction parallel to the direction of longitudinal extension of the foot portion and projects laterally from at least one longitudinal end thereof. The use of such an interconnecting member makes the installation and removal of the anti-hail net easier, allowing, among others, a longitudinal staggering between the anchoring point of the anchoring and tensioning unit to the anti-hail net, preferably close to its corners, and the fastening point of said unit to a mounting crosspiece of the solar panel. Moreover, by suitably configuring the interconnecting member it is possible to use it also as a fastening element for the solar panel. Advantageously, in this case the anchoring and tensioning unit of the invention allows both the anti-hail net and the corresponding solar panel to be anchored to mounting crosspieces or to other fixed mounting structures simultaneously, yet independently from each other.

According to a possible embodiment, the interconnecting member is a profile element comprising a longitudinal channel configured for a sliding shape coupling with the foot portion of the anchoring bracket, and a fastening leg intended for fastening the interconnecting member to a mounting crosspiece of the solar panel. This configuration of the interconnecting member is suitable for attaching the anchoring and tensioning unit at the sides of a single or isolated solar panel or at the free sides of the outermost solar panels in an assembly of mutually adjacent solar panels.

Advantageously, the fastening leg can comprise a plurality of longitudinally aligned and preferably evenly spaced fastening holes.

Preferably, the longitudinal channel is delimited by a flat bottom wall and by a pair of lateral walls, and the fastening leg projects, substantially parallel to the bottom wall of the longitudinal channel, from an extension of one of the lateral walls of the longitudinal channel extending from a side of the bottom wall opposite to the extension side of the lateral walls.

Preferably, the profile element further comprises a longitudinal edge wall extending from the fastening leg perpendicularly thereto, and the longitudinal edge wall comprises a fixed part provided with at least one coupling seat for removably coupling an extension strip for extending the fixed part perpendicularly to the fastening leg.

According to another possible embodiment, the interconnecting member is a profile element comprising two parallel longitudinal channels, each configured to create a prismatic joint with a foot portion of a respective anchoring bracket of the anchoring and tensioning unit, and a connecting web interposed between said two longitudinal channels and intended for fastening the interconnecting member to a mounting crosspiece of the solar panel. This configuration of the interconnecting member is advantageous for attaching an anchoring and tensioning unit comprising two anchoring brackets, intended for anchoring two separate anti-hail nets to two adjacent solar panels, at two facing sides of the two adjacent solar panels.

The invention also relates to a solar panel assembly comprising a solar panel having an active surface, an anti-hail net hanging over said active surface, and anchoring means for anchoring the anti-hail net to the solar panel or to mounting crosspieces of the solar panel, wherein said anchoring means comprise at least one anchoring and tensioning unit according to the invention.

The anti-hail net is preferably a metallic anti-hail net and preferably has a surface extension substantially equal to the surface extension of the active surface of the solar panel.

Further features and advantages of the invention will be more apparent from the following detailed description of preferred embodiments thereof, set forth below by way of non-limiting example, with reference to the accompanying drawings, wherein:
- Fig. 1 is a schematic exploded perspective view of a preferred embodiment of an anchoring and tensioning unit according to the present invention;
- Fig. 2 is a schematic cross-sectional view of the anchoring and tensioning unit of Fig. 1, along the section plane II-II indicated in Fig. 1;
- Fig. 3 is a schematic perspective view of the anchoring and tensioning unit of Fig. 1 in installed condition;
- Fig. 4 is a schematic perspective view of another preferred embodiment of an anchoring and tensioning unit according to the present invention;
- Fig. 5 is a schematic cross-sectional view of the anchoring and tensioning unit of Fig. 4, along the section plane V-V indicated in Fig. 4;
- Fig. 6 is a schematic perspective view of the anchoring and tensioning unit of Fig. 5 in installed condition;
- Figs. 7a-d are schematic perspective views showing different ways of mounting the anchoring and tensioning units of Figs. 1 and 4 for attaching anti-hail nets to two adjacent solar panels;
- Figs. 8 and 9 are respectively a schematic front view and a schematic side view of an alternative embodiment of an anchoring bracket of an anchoring and tensioning unit according to the present invention;
- Fig. 10 is a schematic cross-sectional view of the anchoring bracket of Figs. 8, 9, along the section plane X-X indicated in Fig. 8;
- Fig. 11 is a schematic cross-sectional view, along the section plane XI-XI indicated in Fig. 12, of an anchoring and tensioning unit according to the present invention comprising the anchoring bracket of Figs. 8, 9;
- Fig. 12 is a schematic perspective view of an anchoring and tensioning unit according to the present invention comprising the anchoring bracket of Figs. 8, 9 in installed condition, and
- Figs. 13a-d are schematic perspective views respectively similar to the views of Figs. 7a-d showing different possible ways of mounting the anchoring and tensioning unit of Figs. 11 and 12 for attaching anti-hail nets to two adjacent solar panels.

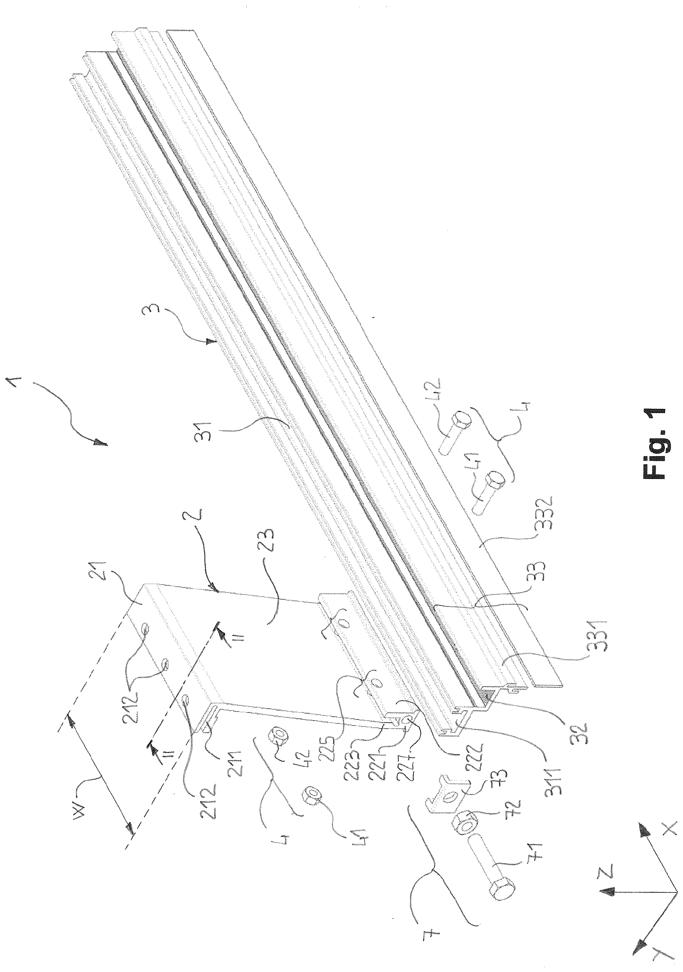

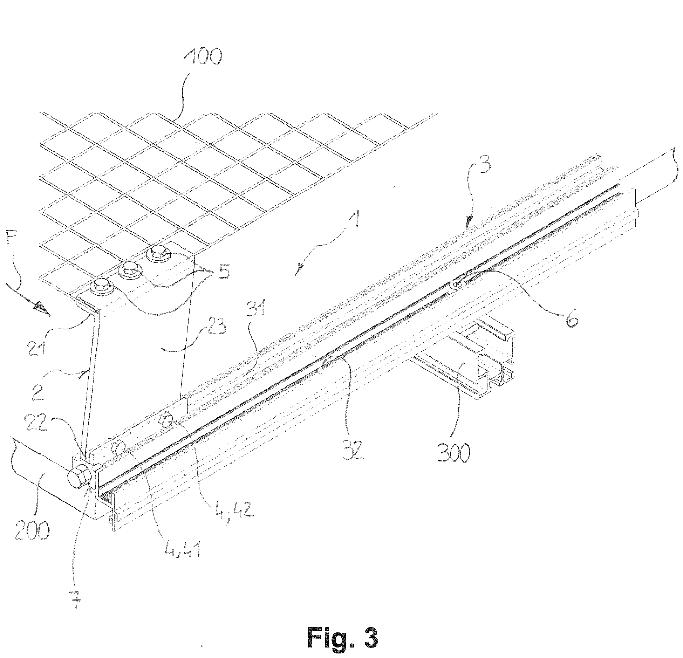

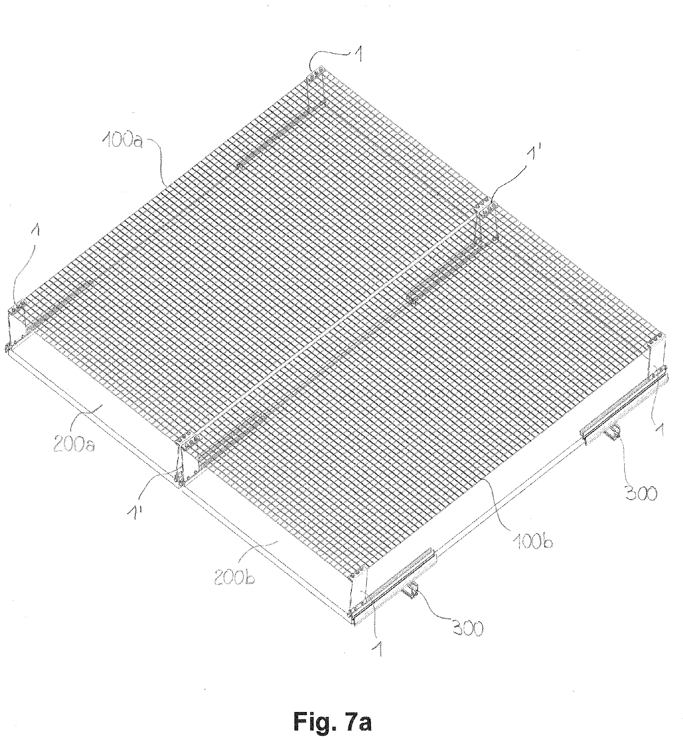

Figs. 1-3 show a preferred embodiment of an anchoring and tensioning unit according to the present invention, generally denoted by reference numeral 1, for attaching an anti-hail net 100, in particular a metallic anti-hail net, to a solar panel 200, as shown in Fig. 3 and in Figs. 7a-d.

The anchoring and tensioning unit 1 is described hereinafter with reference to the spatial arrangement taken in installed condition and to the three orthogonal directions X, Y, Z shown in Fig. 1, wherein these directions correspond respectively to the directions of longitudinal, transverse and vertical extension of the unit and of the relevant components.

As apparent in particular from Fig. 1, the anchoring and tensioning unit 1 comprises an anchoring bracket 2 for the anti-hail net 100, an interconnecting member 3 for connecting the anchoring bracket 2 to a mounting crosspiece 300, or to another fixed mounting structure, of the corresponding solar panel 200, and clamping means 4 acting on the anchoring bracket 2 so as to generate a pulling force F for tensioning the anti-hail net 100 anchored to the anchoring bracket 2.

The anchoring bracket 2 comprises a head portion 21, intended to be removably fastened to the anti-hail net 100, a foot portion 22, intended to be removably fastened to the interconnecting member 3, and a preferably plate-shaped connecting web 23, which connects the head portion 21 and the foot portion 22.

In the preferred embodiment shown here, the head portion 21, the foot portion 22 and the connecting web 23 have the same longitudinal extension, or width W. In other embodiments, not shown, the head portion 21 and the foot portion 22 could have different longitudinal extensions and/or the connecting web 23 could have a different longitudinal extension relative to that of the head portion 21 and/or of the foot portion 22.

The head portion 21 and the foot portion 22 extend transversely from the connecting web 23 in mutually opposite directions, preferably parallel, so that, in a side view, i.e., perpendicularly to the direction X of longitudinal extension, the anchoring bracket 2 as a whole is Z-shaped.

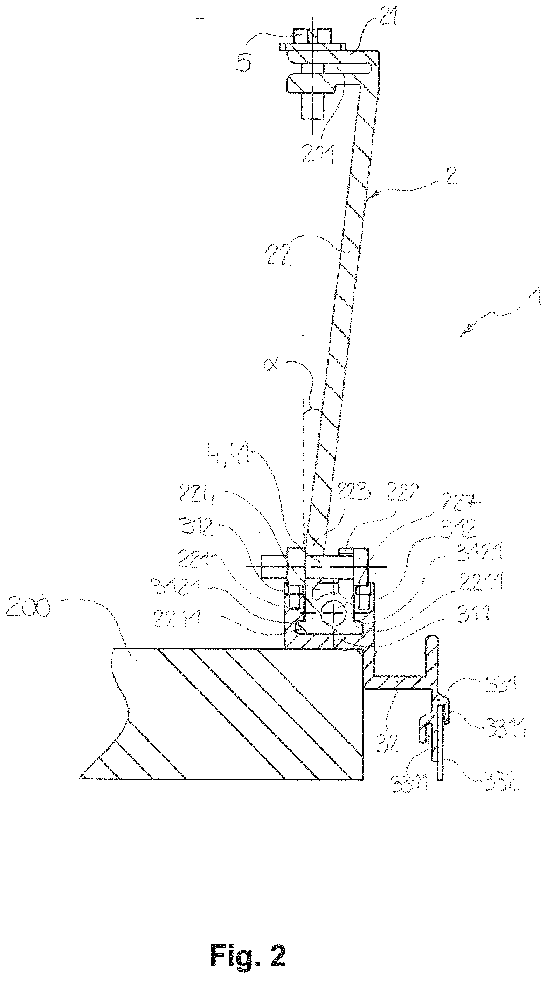

Preferably, the connecting web 23 extends vertically at an angle relative to the head portion 21 and to the foot portion 22. In particular, in a side view of the anchoring bracket 2, the connecting web 23 forms, relative to a direction perpendicular to the head portion 21 and to the foot portion 22, an angle α preferably of between 5° to 20°, for example equal to 14° (Fig. 2). However, embodiments in which the connecting web 23 extends perpendicularly to the head portion 21 and to the foot portion 22 (α=0°) are not excluded.

The head portion 21 of the anchoring bracket 2 has a substantially planar shape and is provided with a front groove 211 intended to receive an edge portion of the anti-hail net 100. The front groove 211 extends longitudinally over the whole longitudinal extension of the head portion 21 and is open at the lateral ends thereof. Moreover, as can be seen in particular from Fig. 2, the front groove 211 transversely has a relatively deep and thin shape, so as to receive a substantial portion of the edge of the anti-hail net 100 with minimum vertical clearance.

The edge portion of the anti-hail net 100 received in the front groove 211 is retained therein by means of one or more clamping elements 5, for example clamping screws or bolts, fitted in corresponding holes 212 formed in the head portion 2 so as to intersect, preferably perpendicularly, the front groove 211.

The foot portion 22 of the anchoring bracket 2, in a side view, i.e., transversely, has substantially a U-shape, defined by a fastening base 221, by an end portion 223 of the connecting web 23 adjacent and connected to the fastening base 221, and by a leg 222 projecting from the fastening base 221 and facing the end portion 223 of the connecting web 23.

The fastening base 221 is preferably provided, at opposite lateral walls thereof, with transversely projecting longitudinal ribs 2211, for coupling the foot portion 22 to the interconnecting member 3, as described in more detail below.

The anchoring bracket 2 having the features described above is preferably made of metal, for example aluminium or alloys thereof, and preferably in one piece.

The interconnecting member 3 has a generally elongated shape and a longitudinal extension greater than the longitudinal extension W of the anchoring bracket 2, in particular of the foot portion 22 thereof.

The interconnecting member 3 advantageously consists of a profile bar having a cross-sectional shape suitably designed to allow removable coupling with the anchoring bracket 2 and, at the same time, fastening to a mounting crosspiece 300 of the solar panel 200 to which the anti-hail net 100 is to be attached. More in detail, the interconnecting member 3 comprises a longitudinal channel 31 configured to create a sliding shape coupling with the foot portion 22 of the anchoring bracket 2 and a fastening leg 32 for fastening the interconnecting member 3 to a mounting crosspiece 300 of the solar panel 200.

The longitudinal channel 31 is delimited by a flat bottom wall 311 and by a pair of lateral walls 312. The lateral walls 312 define, toward the inside of the longitudinal channel 31, respective undercut portions 3121 that extend longitudinally and are intended to cooperate with the longitudinal ribs 2211 of the fastening base 221 of the foot portion 22 of the anchoring bracket 2 to create the aforesaid prismatic joint, as can be seen in particular in Fig. 2.

To lock the anchoring bracket 2 relative to the interconnecting member 3 also in longitudinal direction, longitudinal locking means 7 are provided. These locking means comprise a tensioning screw 71 with associated stop nut 72, which acts longitudinally on the anchoring bracket 2 at the foot portion 22 with the interposition of an end plate 73 intended to abut against an end of the longitudinal channel 31 of the interconnecting member 3 (Fig. 3). The tensioning screw 71 engages in a specific longitudinal hole 227 formed in the fastening base 221 of the foot portion 22 of the anchoring bracket 2. Longitudinal locking of the latter is obtained, in an installed condition of the anchoring and tensioning unit 1, by adjusting the tightening of the tensioning screw 72 in opposition to another longitudinal anchoring of the anti-hail net 100, in particular obtained through another anchoring and tensioning element 1, which anchors the anti-hail net 100 along the same side.

The fastening leg 32 of the interconnecting member 3 has a planar shape and extends longitudinally along a flank of the longitudinal channel 31, parallel to, but in a vertically, i.e., along the direction Z, staggered position relative to the bottom wall 311 thereof. More in detail, the fastening leg 32 protrudes from an extension of one of the lateral walls 312 of the longitudinal channel 32 that extends from a side of the bottom wall 311 opposite the side on which the lateral walls 312 extend.

Such a relative arrangement of the longitudinal channel 31 and the fastening leg 32 advantageously gives the interconnecting member 3, in a cross-sectional view, a straight stepped shape (Fig. 2). This shape allows the interconnecting member 3 to be arranged abutting against a section of a perimeter frame of the solar panel 200 in both directions perpendicular to the direction of longitudinal extension of the interconnecting member 3, and hence a particularly stable coupling between the clamping and tensioning unit 1 and the solar panel 200 to be achieved.

Moreover, thanks to this configuration, the interconnecting member 3 can also function as fastening element for the solar panel 200, thereby avoiding the use of separate fastening means for this purpose. In particular, fastening of the solar panel 200 is obtained by pressure, when the interconnecting member 3 is fastened via the fastening leg 32 to a mounting crosspiece 300 of the solar panel 200. Thanks to the removable coupling between the anchoring bracket 2 and the interconnecting member 3, the anti-hail net 100 can in any case be independently attached to and removed from solar panel 200. In this case, the anchoring and tensioning unit 1 can advantageously be used for anchoring simultaneously, but independently from each other, both the anti-hail net 100 and the solar panel 200 to a mounting crosspiece 300.

The interconnecting member 3 is fastened to a mounting crosspiece 300 of the solar panel 200 by means of at least one suitable fastening element 6, for example a screw with associated locking insert or plate for profiles. For this purpose, the fastening leg 32 of the interconnecting member 3 is provided with at least one fastening hole (not visible in the figures) for inserting the fastening element 6. Advantageously, the fastening leg 32 can comprise a plurality of longitudinally aligned, preferably evenly spaced, fastening holes, to be used alternatively, based on the installation conditions, in the case of a single fastening element 6, or also at least partly simultaneously, in the case of more than one fastening element 6.

The interconnecting member 3 also comprises a longitudinal edge wall 33 that extends perpendicularly to the fastening leg 32, along a distal edge thereof relative to the longitudinal channel 31. The longitudinal edge wall 33 extends vertically at least from a side of the fastening leg 32 opposite the side on which the longitudinal channel 31 lies, so as to define a supporting leg by means of which the interconnecting member 3 can rest on the mounting crosspiece 300 of the solar panel 200 and transfer the forces and torques that arise in use further to the tensioning of the anti-hail net 100.

The longitudinal edge wall 33 preferably has a modular structure, to fit different installation heights, for example resulting from different thicknesses of the solar panel 200. More in detail, the longitudinal edge wall 33 consists of a fixed part 331, integrally formed with the interconnecting member 3, and of an extension strip 332 (shown in Figs. 1 and 2), which can be removably and optionally associated with the fixed part 331 to increase the extension thereof in vertical direction.

The fixed part 331 of the longitudinal edge wall 33 is configured so as to define at least one coupling seat for removably coupling the extension strip 332.

In particular, in the preferred embodiment shown herein, the fixed part 331 has, in a cross-sectional view, an asymmetrical "trident" shape consisting of a longer central extension or leg and of two shorter lateral extensions or legs, which branch at different heights from the central leg and extend parallel thereto. Between the central leg and the lateral legs two vertically staggered coupling seats or slots 3311 are defined, into which the extension strip 332 can optionally and selectively be inserted sideways. This configuration allows the interconnecting member 3, and hence the anchoring and tensioning unit 1 as a whole, to be adapted in a particularly efficient and simple way to three different installation heights: a minimum height, obtainable without using the extension strip 332 (Fig. 3), and two further heights, different from each other and greater than the minimum height, obtainable using the extension strip 332 inserted into one of the two aforesaid coupling seats (Fig. 2).

The interconnecting member 3 having the features described above is preferably made of metal, for example aluminium or alloys thereof.

The clamping means 4 are attached to the anchoring bracket 2 and act thereon so as to cause a relative movement of the head portion 21 relative to the foot portion 22 with at least one component along the transverse direction Y and pointing toward a side of the anchoring bracket opposite the side from which the head portion 21 and, consequently, the anti-hail net 100 anchored thereto, extend. When the anchoring and tensioning unit 1 is installed, this movement causes a pulling force F to be applied to the anti-hail net 100, thereby tensioning it in the transverse direction Y.

In the preferred embodiment shown herein, the clamping means 4 comprise a pair of clamping bolts 41, 42 acting at the foot portion 22 of the anchoring bracket 2, between the end portion 223 of the connecting web 23 adjacent to the fastening base 221 and the leg 222 facing said end portion 223. Each clamping bolt 41, 42 extends at least partly, preferably exclusively, in transverse direction Y, through a respective pair of holes 225, 226 respectively formed in the leg 222 and in the end portion 223 of the connecting web 23. Tightening of the clamping bolts 41, 42 causes a bending of the connecting web 23 toward the leg 222 and thus the aforesaid relative movement of the head portion 21 of the anchoring bracket 2 relative to the foot portion 22. By varying the clamping degree of the clamping bolts 41, 42, it is possible to control this movement and the pulling force F applied by the anchoring and tensioning unit 1, in particular by the anchoring bracket 2, on the anti-hail net 100, and thus to adjust substantially continuously the tension of the latter.

To help bending of the connecting web 23, at the end portion 223 thereof adjacent to the fastening base 221, on the side facing the leg 222, a longitudinal groove 224 can advantageously be formed to locally reduce the thickness of the wall of the connecting web 23, so as to define a line of lower bending stiffness.

Fig. 3 shows the anchoring and tensioning unit 1 described above in the installed condition. The anchoring and tensioning unit 1 is arranged close to a corner of the solar panel 200 and of the corresponding anti-hail net 100 and extends longitudinally along one of their sides forming said angle. More in detail, the interconnecting member 3 extends parallel to and abutting, both above and laterally, with the side in question of the solar panel 200 and is firmly fastened to a mounting crosspiece 300 thereof by means of the fastening element 6. The anchoring bracket 2 anchors, through its head portion 21, the anti-hail net 100 at a position directly adjacent to the corner and is firmly attached to the interconnecting member 3 through its foot portion 22, thanks to the shape coupling with the longitudinal channel 31 and the longitudinal locking means 7, as already described above.

The anchoring and tensioning unit 1 shown in Figs. 1-3 and described above is conceived to be installed at the sides of single or isolated solar panels or at the free sides of the outermost solar panels in an assembly of mutually adjacent solar panels. In particular, to attach an anti-hail net to a single or isolated solar panel, four anchoring and tensioning units 1 can advantageously be used, arranged in pairs along two opposite sides of the solar panel and of the anti-hail net, close to their corners.

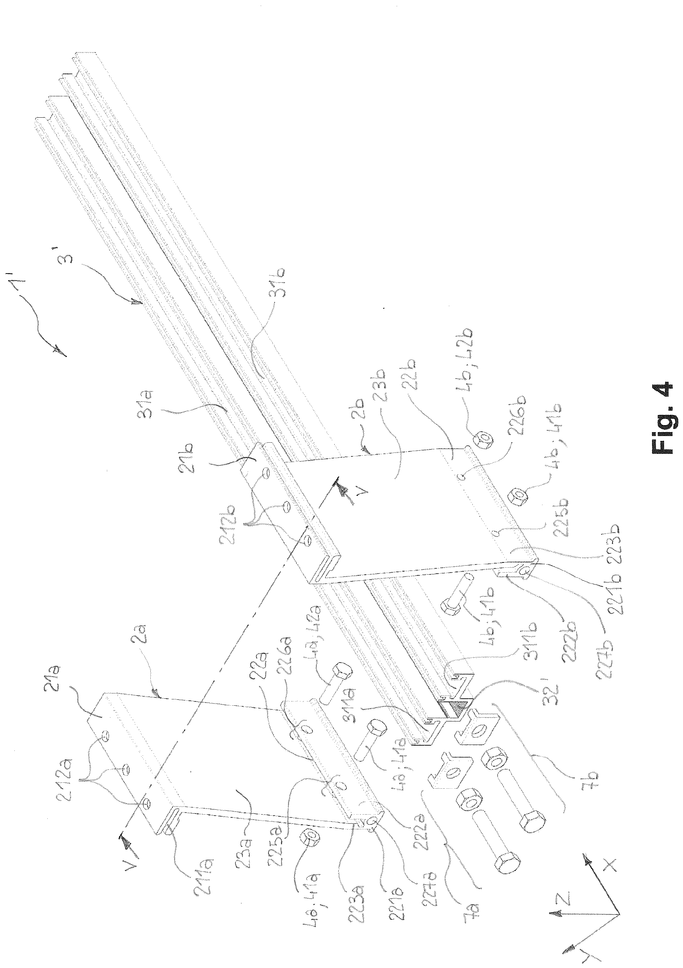

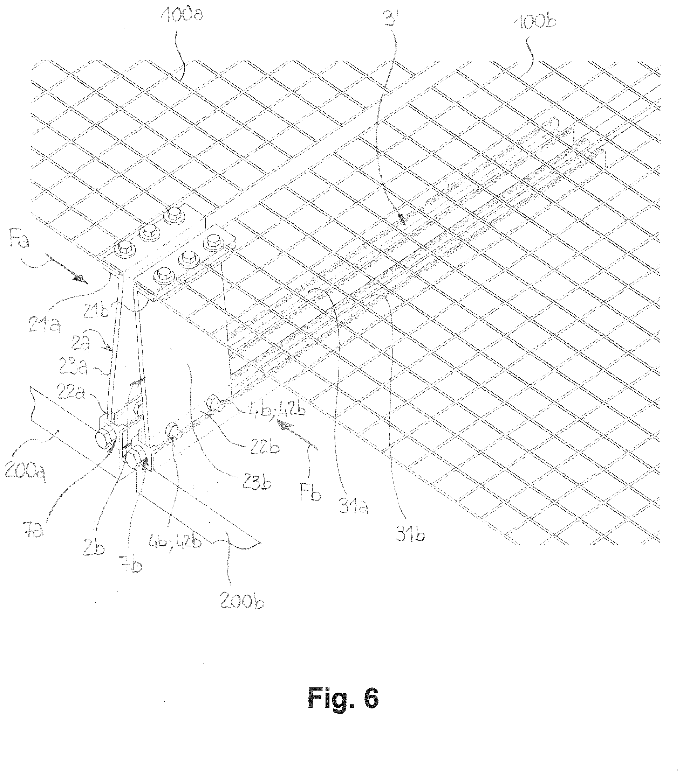

Figs. 4-6 show another preferred embodiment of an anchoring and tensioning unit according to the invention, generally denoted by reference numeral 1'. The anchoring and tensioning unit 1' is conceived to be installed between two adjacent solar panels 200a, 200b and to anchor and tension two respective anti-hail nets 100a, 100b simultaneously (Fig. 6).

The anchoring and tensioning unit 1' comprises two anchoring brackets 2a, 2b, one for each of the two anti-hail nets 100a, 100b, a common interconnecting member 3' to connect the anchoring brackets 2a, 2b to a mounting crosspiece 300, or to another fixed mounting structure, of the solar panels 200a, 200b, clamping means 4a, 4b acting respectively on the anchoring bracket 2a and on the anchoring bracket 2b so as to generate respective pulling forces Fa, Fb to tension the respective anti-hail net 100a, 100b, and longitudinal locking means 7a, 7b.

The anchoring brackets 2a, 2b, the clamping means 4a, 4b, and the longitudinal locking means 7a, 7b are identical respectively to the anchoring bracket 2, to the clamping means 4, and to the longitudinal locking means 7 of the anchoring and tensioning unit 1. These components are denoted by the same reference numerals as those of the corresponding components of the anchoring and tensioning unit 1, with the addition of the suffixes "a" or "b", and for a detailed description thereof reference is made to the previous description of the clamping and tensioning unit 1. The operating mechanism of the clamping means 4a, 4b on the respective anchoring bracket 2a, 2b is also identical to that of the clamping means 4 on the anchoring bracket 2 of the clamping and tensioning unit 1, described above.

Also in this case the interconnecting member 3' consists of a profile bar, however with a different cross-sectional shape relative to that of the interconnecting member 3 of the anchoring and tensioning unit 1. More in detail, the interconnecting member 3' comprises two longitudinal channels 31a, 32b parallel to each other, configured to respectively create a shape coupling with the foot portion 22a of the anchoring bracket 2a and the foot portion 22b of the anchoring bracket 2b, and a connecting web 32' at which the interconnecting member 3' can be fastened to a mounting crosspiece 300 of the solar panels 200a, 200b.

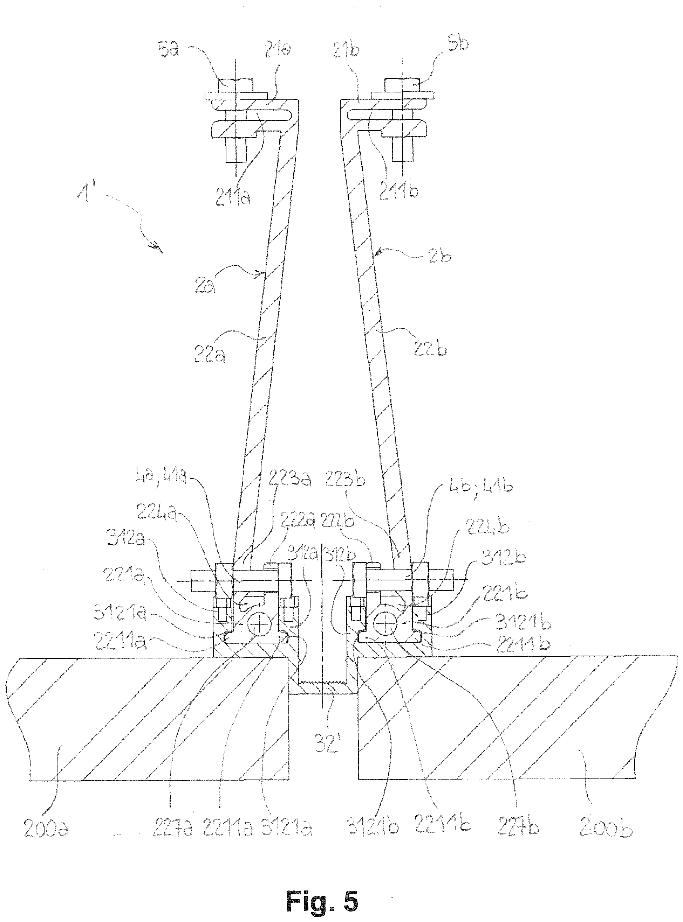

The longitudinal channels 31a, 31b have a configuration identical to that of the longitudinal channel 31 of the interconnecting member 3 of the anchoring and tensioning unit 1, described previously. The longitudinal channels 31a, 31b extend longitudinally at the same height in vertical direction Z and, in particular, comprise respective coplanar bottom walls 311a, 311b. The connecting web 32' has a planar shape and extends between the two longitudinal channels 31a, 31b, parallel, but in a vertically staggered position relative to the bottom walls 311a, 311b thereof, so as to form with the two longitudinal channels 31a, 31b respective straight steps, through which the interconnecting member 3' can abut against facing sections of perimeter frames of the solar panels 200a, 200b according to both directions perpendicular to the direction of longitudinal extension of said interconnecting member 3' (Fig. 5).

Among others, such a configuration of the interconnecting member 3' allows it to be used also as a fastening element for the two adjacent solar panels 200a, 200b, similarly to what was explained previously with reference to the embodiment shown in Figs. 1-3.

The connecting web 32' is provided with at least one fastening hole, preferably a plurality of longitudinally aligned, evenly spaced, fastening holes, not shown in the figures, for inserting of a fastening element, also not shown in the figures, to fasten the interconnecting member 3' to a mounting crosspiece 300 of the solar panels 200a, 200b, similarly to what was described above with reference to the fastening of the interconnecting member 3 of the anchoring and tensioning unit 1.

Figs. 7a-d show examples of use and possible way of installation of the anchoring and tensioning units 1, 1' described above to attach respective anti-hail nets 100a, 100b to two adjacent solar panels 200a, 200b. The anti-hail nets 100a, 100b are in particular metallic anti-hail nets and have a surface extension substantially equal to the surface extension of the active surface of the solar panels 200a, 200b.

To attach each anti-hail net 100a, 100b to the respective solar panel 200a, 200b four anchoring and tensioning units 1, 1' are advantageously used, arranged in pairs along two opposite sides of the solar panels 200a, 200b and of the anti-hail nets 100a, 100b, close to their corners. In particular, the anchoring and tensioning units 1 are used along the free external sides of the solar panels 200a, 200b and of the anti-hail nets 100a, 100b, while the anchoring and tensioning units 1' are used at the pair of mutually adjacent sides.

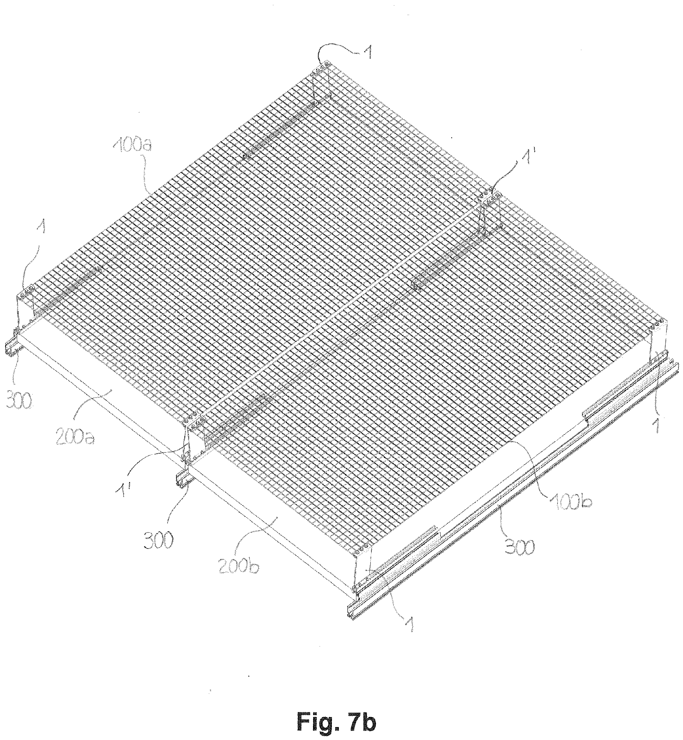

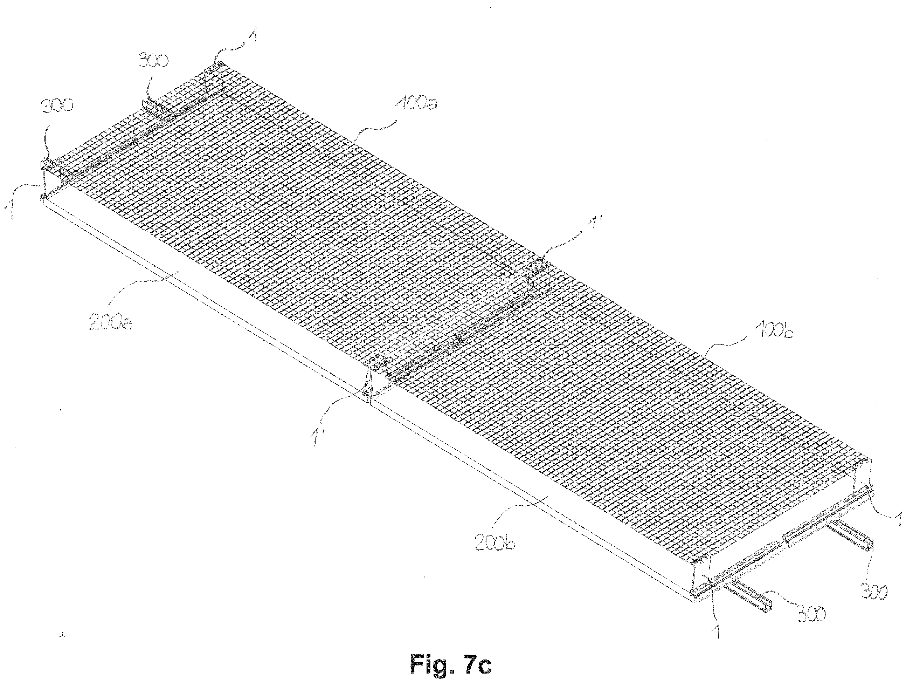

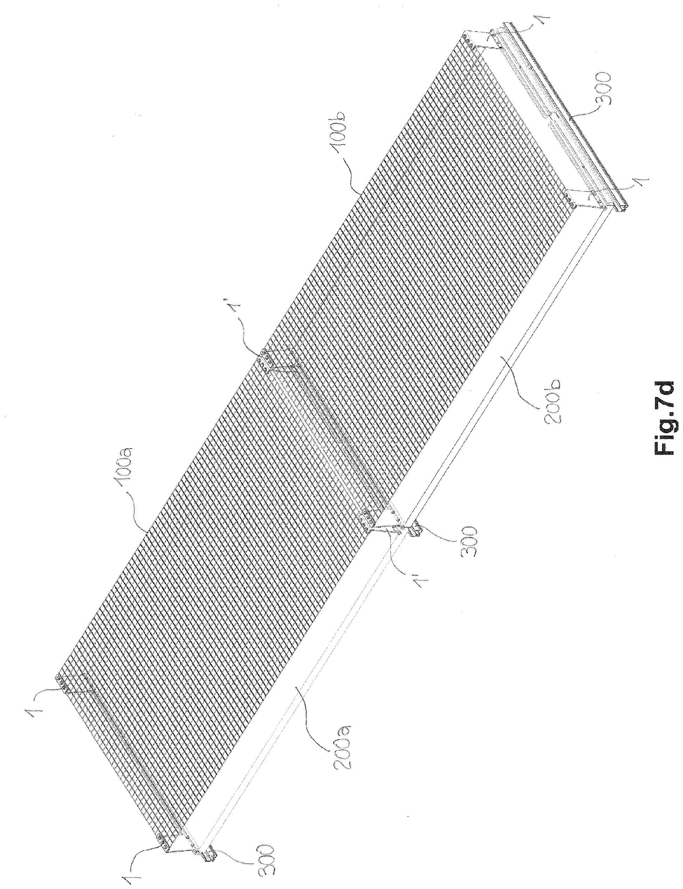

In detail, Figs. 7a-b show installation in the case in which the two solar panels 200a, 200b are arranged side by side along a long side thereof, with mounting crosspieces 300 extending perpendicularly to the long sides (Fig. 7a), or parallel to, and at, these sides (Fig. 7b), while Figs. 7c-d show installation in the case in which the two solar panels 200a, 200b are arranged side by side along a short side thereof, with mounting crosspieces 300 that extend perpendicularly to the short sides (Fig. 7c), or parallel to, and at, these sides (Fig. 7d).

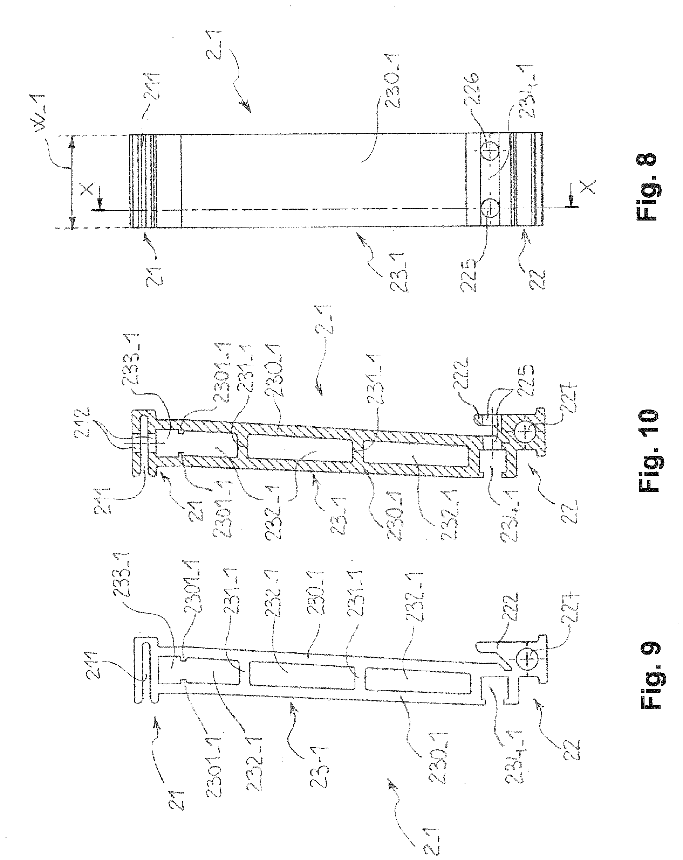

Figs. 8-12 refer to a further preferred embodiment of an anchoring and tensioning unit according to the present invention, generally denoted by reference numeral 1_1. The anchoring and tensioning unit 1_1 is basically similar to the anchoring and tensioning unit 1 previously described in detail with reference to Figs. 1-3, from which it differs in the structure of the respective anchoring bracket 2_1, shown separately in Figs. 8-10. Same components as those of the anchoring and tensioning unit 1 are provided with the same reference numerals and will not be described again in detail hereinafter.

The anchoring bracket 2_1 comprises, just as the anchoring bracket 2 described previously, a head portion 21 and a foot portion 22 connected to each other through a connecting web 23_1. The head portion 21 and the foot portion 22 are structurally and functionally similar to the corresponding portions of the anchoring bracket 23. Instead, in this case the connecting web 23_1 has an internally hollow diaphragmed configuration. This configuration allows making anchoring brackets having a substantially smaller longitudinal extension, i.e., width (denoted by W_1 in Fig. 8), than that of anchoring brackets having a plate-shaped connecting web, such as the anchoring bracket 2 of the anchoring and tensioning unit 1 described previously, while providing equivalent performance in terms of functionality and mechanical strength. A smaller width of the anchoring brackets is advantageous to correspondingly reduce adverse effects on the performance of the solar panel to which the anchoring and tensioning unit of the invention is attached, due to the shade that, in use, they project onto the solar panel, above all in conditions of particularly grazing incidence of the solar radiation (winter months, sunrise and sunset).

More in detail, as can be seen in particular from Figs. 9-12, the connecting web 23_1 comprises two opposite, preferably flat and parallel, front walls 230_1, transversely connected to each other by diaphragms 231_1 extending in the direction X of longitudinal extension of the anchoring bracket 2_1, preferably parallel to each other. The diaphragms 231_1 delimit in the connecting web 23_1 longitudinal channels 232_1, preferably open at the lateral ends of the connecting web 23_1. In particular, in the embodiment shown in the figures two diaphragms 231_1 are provided, which delimit three longitudinal channels 232_1; however, the number of diaphragms 231_1, and hence of longitudinal channels 232_1, depends in general on the contingent structural and functional requirements and can be chosen freely. In this regard, in a variant of the anchoring bracket 2_1 not shown in the figures, the diaphragms 231_1 could also be missing, so that a single longitudinal channel 232_1, i.e., a single continuous chamber, open at the lateral ends thereof, would be defined in the connecting web 23_1.

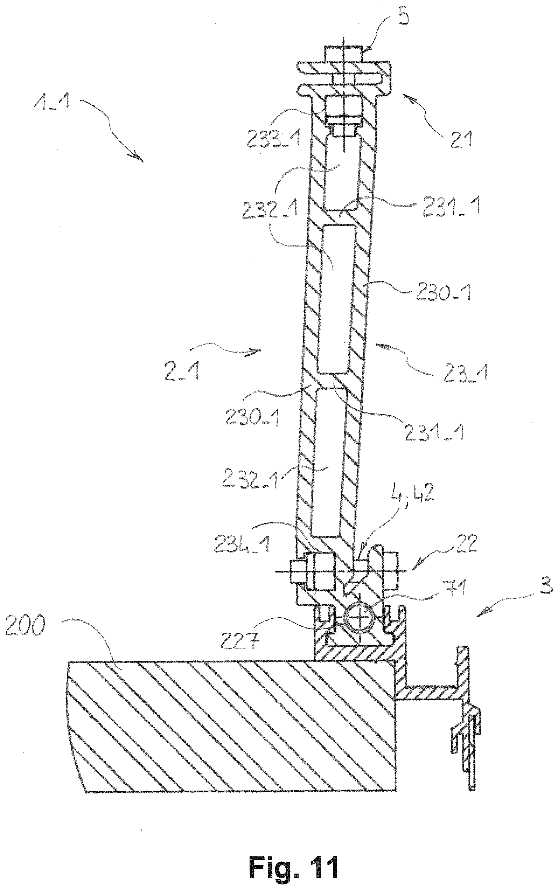

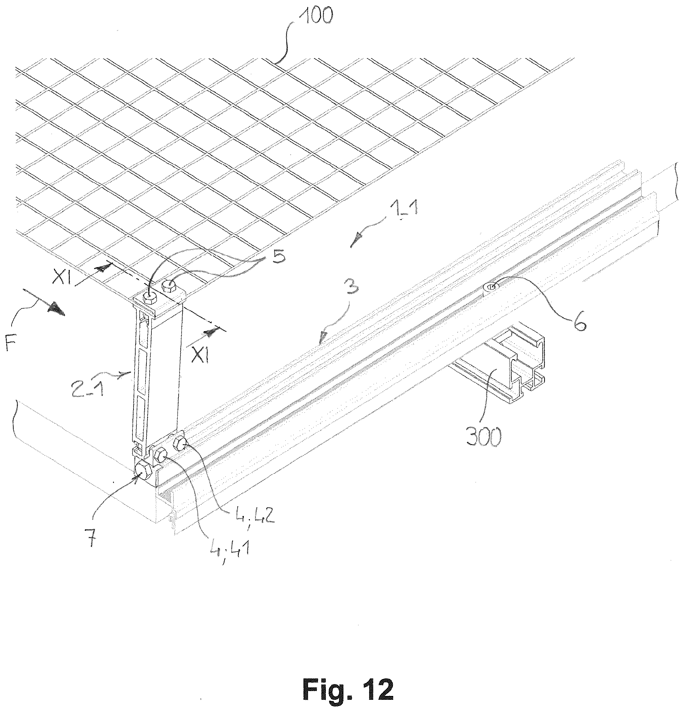

A longitudinal seat 233_1, intended to receive and guide components, for example nuts and corresponding washers, of the clamping elements 5 for fastening the anti-hail net 100, is preferably defined in the longitudinal channel 232_1 of the connecting web 23_1 which is adjacent to the head portion 21 of the anchoring bracket 2_1 (Figs. 11 and 12). The seat 233_1 is advantageously delimited relative to the remaining portion of the longitudinal channel 232_1 by means of a pair of ribs 2301_1 respectively projecting from the front walls 230_1 of the connecting web 23_1.

Similarly, a longitudinal seat 234_1 intended to receive and guide components of the clamping means 4, in particular nuts and corresponding washers of the bolts 41, 42, acting on the anchoring bracket 2_1 so as to generate the pulling force F to tension the anti-hail net 100 anchored to the anchoring bracket 2_1, is preferably defined at the end portion of the connecting web 23_1 adjacent to the foot portion 22 of the anchoring bracket 2_1 (Figs. 11 and 12). The seat 234_1 is transversely delimited by the two front walls 230_1 of the connecting web 23_1 and is longitudinally aligned with the pairs of holes 225, 226 intended to receive the screws of bolts 41, 42, which in this case are formed in the leg 222 of the foot portion 22 and in the front wall 230_1 of the connecting web 23_1 facing the leg 222, respectively.

Except for this, the anchoring bracket 2_1 has features similar to those of the anchoring bracket 2 of the anchoring and tensioning unit 1 described previously.

The way of installation and the operating principle of the anchoring and tensioning unit 1_1 are also similar to those of the anchoring and tensioning unit 1 described previously, as can also be seen by comparing Figs. 11 and 12 respectively with Figs. 2 and 3.

The anchoring bracket 2_1 can also be used in an anchoring and tensioning unit 1'_1 according to the invention similar to the one shown in Figs. 4-6 and described in detail above with reference to those figures, which comprises two anchoring brackets associated with a single common interconnecting member and is intended to be installed between two adjacent solar panels to anchor and tension the respective anti-hail nets.

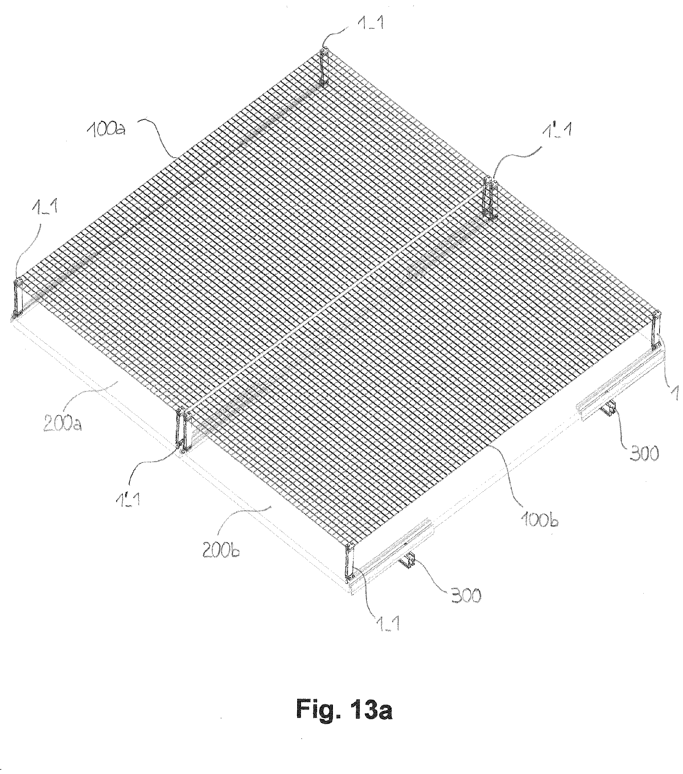

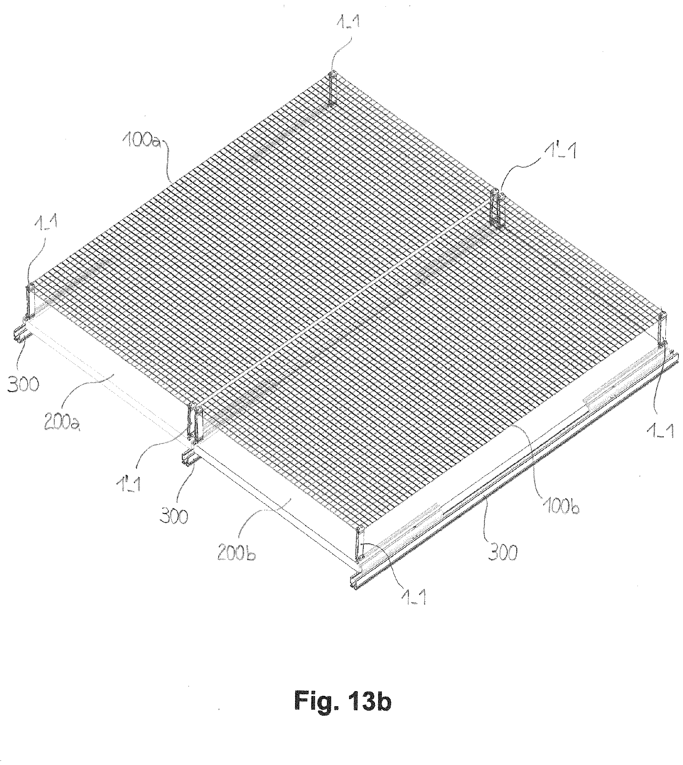

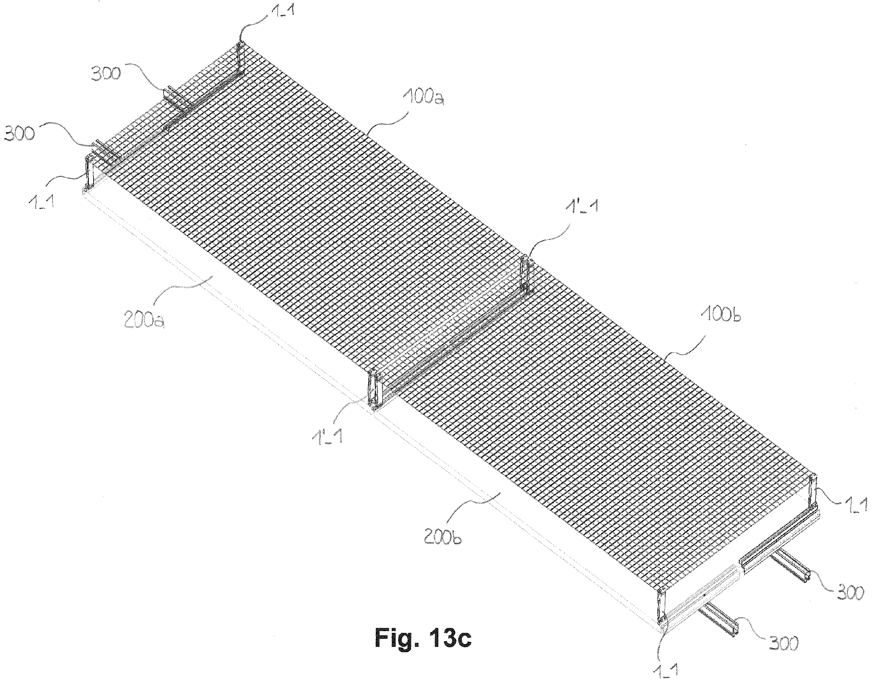

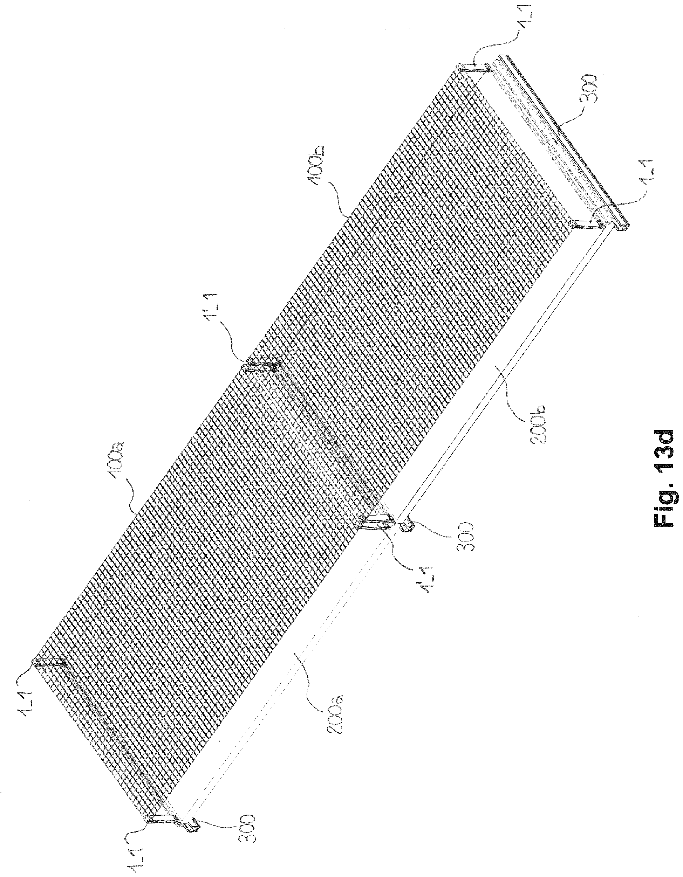

Figs. 13a-d show the use of the anchoring and tensioning units 1_1 and 1'_1 to attach respective anti-hail nets 100a, 100b to two adjacent solar panels 200a, 200b, in a way totally similar to that described above in relation to Figs. 7a-d for the anchoring and tensioning units 1 and 1'. By comparing Figs. 13a-d with Figs. 7a-d it can clearly be seen how, keeping the installation arrangement the same, the smaller longitudinal extension, i.e., width, of the anchoring brackets 2_1 of the anchoring and tensioning units 1_1 and 1'_1 allows the projection of shadows onto the active surface of the solar panels 200a, 200b in case of grazing incidence of the solar radiation to be substantially reduced, to the benefit of the operating efficiency of said panels.

Of course, in order to meet specific and contingent application needs, a person skilled in the art may make modifications and variations to the anchoring and tensioning units described in detail above without departing from the scope of protection as defined by the appended claims.

## Claims

1. Anchoring and tensioning unit (1; 1'; 1_1) for anti-hail nets of solar panels, comprising:
- at least one anchoring bracket (2; 2a, 2b; 2_1) having a head portion (21; 21a, 21b) intended to be fastened to an anti-hail net (100, 100a, 100b) of a solar panel (200, 200a, 200b), a foot portion (22; 22a, 22b) intended to be directly or indirectly fastened to a frame of the solar panel (200, 200a, 200b) or to a mounting crosspiece (300) of the solar panel (200, 200a, 200b), and a connecting web (23; 23a, 23b; 23_1) extending between the head portion (21; 21a, 21b) and the foot portion (22; 22a, 22b), and
- clamping means (4; 4a, 4b) acting on the anchoring bracket (2; 2a, 2b; 2_1) so as to cause a relative displacement of said head portion (21; 21a, 21b) relative to said foot portion (22; 22a, 22b) that generates at said head portion (21; 21a, 21b) a pulling force (F; Fa, Fb) pointing toward a side of the anchoring bracket (2; 2a, 2b; 2_1) opposing the side from which the anti-hail net (100, 100a, 100b) extends.

2. Anchoring and tensioning unit (1; 1'; 1_1) according to claim 1, wherein said clamping means (4; 4a, 4b) are adjustable and said pulling force (F; Fa, Fb) can be adjusted by varying the clamping degree of the clamping means (4; 4a, 4b).

3. Anchoring and tensioning unit (1; 1'; 1_1) according to any one of the previous claims, wherein said head portion (21; 21a, 21b) and said foot portion (22; 22a, 22b) extend transversely in mutually opposite directions from said connecting web (23; 23a, 23b; 23_1).

4. Anchoring and tensioning unit (1; 1') according to any one of the previous claims, wherein said connecting web (23; 23a, 23b) has a plate-shaped configuration.

5. Anchoring and tensioning unit (1_1) according to any one of claims 1 to 3, wherein said connecting web (23_1) has an internally hollow, preferably diaphragmed, configuration, defining at least one channel (232_1) extending in a direction of longitudinal extension of the anchoring bracket (2_1).

6. Anchoring and tensioning unit (1; 1'; 1_1) according to any one of the previous claims, wherein, in a side view of the anchoring bracket (2; 2a, 2b; 2_1), said foot portion (22; 22a, 22b) has substantially a U-shape defined by a fastening base (221; 221a, 221b) of the foot portion (22; 22a, 22b), by an end portion (223; 223a, 223b) of the connecting web (23; 23a, 23b; 23_1) adjacent to said fastening base (221; 223a, 223b), and by a leg (222; 222a, 222b) projecting from said fastening base (221; 221a, 221b) and facing said end portion (223; 223a, 223b) of the connecting web (23; 23a, 23b; 23_1).

7. Anchoring and tensioning unit (1; 1'; 1_1) according to claim 6, wherein said clamping means (4; 4a, 4b) act between said end portion (223; 223a, 223b) of the connecting web (23; 23a, 23b; 23_1) and said leg (222; 222a, 222b) so that a tightening of the clamping means (4; 4a, 4b) causes said connecting web (23; 23a, 23b) to bend toward said leg (222; 222a, 222b).

8. Anchoring and tensioning unit (1; 1'; 1_1) according to any one of the previous claims, wherein said head portion (21; 21a, 21b) is provided with a front anchoring groove (211; 211a, 211b) for an edge portion of the anti-hail net (100, 100a, 100b).

9. Anchoring and tensioning unit (1; 1'; 1_1) according to any one of the previous claims, wherein the anchoring bracket (2; 2a, 2b; 2_1) is made in one piece.

10. Anchoring and tensioning unit (1; 1'; 1_1) according to any one of the previous claims, further comprising an interconnecting member (3; 3') having an elongated shape for connecting said anchoring bracket (2; 2a, 2b; 2_1) to a mounting crosspiece (300) of the solar panel (200, 200a, 200b), wherein said interconnecting member (3; 3') is removably associated with the foot portion (22; 22a, 22b) of said anchoring bracket (2; 2a, 2b; 2_1) according to a direction parallel to the direction of longitudinal extension of said foot portion (22; 22a, 22b) and projects laterally from at least one longitudinal end of said foot portion (22; 22a, 22b).

11. Anchoring and tensioning unit (1; 1_1) according to claim 9, wherein said interconnecting member (3) is a profile element comprising a longitudinal channel (31) configured for a shape coupling with the foot portion (22) of said anchoring bracket (2; 2_1), and a fastening leg (32) intended for fastening the interconnecting member (3) to the mounting crosspiece (300) of the solar panel (200, 200a, 200b).

12. Anchoring and tensioning unit (1; 1_1) according to claim 11, wherein said longitudinal channel (31) is delimited by a flat bottom wall (311) and by a pair of lateral walls (312), and wherein said fastening leg (32) projects, substantially parallel to said bottom wall (311), from an extension of one of said lateral walls (312) extending from a side of said bottom wall (311) opposite the extension side of said lateral walls (312).

13. Anchoring and tensioning unit (1; 1_1) according to any one of claims 11 or 12, wherein said profile element further comprises a longitudinal edge wall (33) extending from said fastening leg (32) perpendicularly thereto, and wherein said longitudinal edge wall (33) comprises a fixed part (331) provided with at least one coupling seat (3311) for removably coupling an extension strip (332) for extending said fixed part (311) perpendicularly to said fastening leg (32).

14. Anchoring and tensioning unit (1') according to claim 10, wherein said interconnecting member (3') is a profile element comprising two parallel longitudinal channels (31a, 31b), each configured for a shape coupling with a foot portion (22a, 22b) of a respective anchoring bracket (2a, 2b) of the anchoring and tensioning unit (1'), and a connecting web (32') interposed between said longitudinal channels (31a, 31b) and intended for fastening the interconnecting member (3') to the mounting crosspiece (300) of the solar panel (200a, 200b).

15. A solar panel assembly comprising a solar panel (200, 200a, 200b) having an active surface, an anti-hail net (100; 100a, 100b) hanging over said active surface, and anchoring means for anchoring the anti-hail net (100; 100a, 100b) to the solar panel (200, 200a, 200b) or to mounting crosspieces (300) of the solar panel (200, 200a, 200b), wherein said anchoring means comprise at least one anchoring and tensioning unit (1; 1'; 1_1) according to any one of the previous claims.

16. A solar panel assembly according to claim 15, wherein said anti-hail net (100, 100a, 100b) is a metallic net.
